# EUROPÄISCHE PATENTANMELDUNG

(11) **EP 3 141 722 A1**
(43) Veröffentlichungstag der Anmeldung: **15.03.2017**
(21) Anmeldenummer: 16187124.9
(22) Anmeldetag: 02.09.2016
(51) Int. Cl.: F01P 7/16, G05D 23/13

(54) **THERMOSTATVENTIL FÜR KÜHLMITTEL VON THERMOSTATVENTIL**

(30) Priorität: 09.09.2015 DE 102015217236
(71) Anmelder: Joma-Polytec GmbH, 72411 Bodelshausen (DE)
(72) Erfinder: Stifel, Torsten, 72401 Haigerloch-Gruoi (DE); Holocher, Alex, 72379 Hechingen-Stetten (DE); Heinz, Stefan, 72411 Bodelshausen (DE)
(74) Vertreter: DREISS Patentanwälte PartG mbB

(57) **Zusammenfassung**

Thermostatventil (10, 60), insbesondere für Kühlmittel von Verbrennungsmotoren, mit einem Gehäuse (12), wobei das Gehäuse (12) einen Vorlaufanschluss (14), einen Rücklaufanschluss (16) und einen Wärmetauscheranschluss (18) aufweist, mit einem im Gehäuse (12) verstellbaren Ventilkörper (20) und mit einem temperatursensitiven Aktuator (26, 28) zur Betätigung des Ventilkörpers, dadurch gekennzeichnet, dass wenigstens zwei hintereinander in Reihe geschaltene temperatursensitive Aktuatoren (26, 28) vorgesehen sind, die den Ventilkörper derart betätigen, dass der Ventilkörper
- bei Unterschreiten einer im Vorlaufanschluss (14) vorliegenden Kühlmitteltemperatur t₁ in eine Grundstellung, in der der Vorlaufanschluss (14) mit dem Rücklaufanschluss (16) verbunden ist,
- bei Überschreiten der Kühlmitteltemperatur t₁ und bei Unterschreiten einer Kühlmitteltemperatur t₂ in eine Teillaststellung, in der der Vorlaufanschluss (14) mit dem Rücklaufanschluss (16) und dem Wärmetauscheranschluss (18) verbunden ist, und
- bei Überschreiten der Kühlmitteltemperatur t₂ in eine Volllaststellung, in der der Vorlaufanschluss (14) mit dem Wärmetauscheranschluss (18) verbunden ist,
bewegt wird.

## Beschreibung

Die Erfindung betrifft ein Thermostatventil, insbesondere für Kühlmittel von Verbrennungsmotoren, mit einem Gehäuse, wobei das Gehäuse einen Vorlaufanschluss, einen Rücklaufanschluss und einen Wärmetauscheranschluss aufweist, mit einem im Gehäuse verstellbaren Ventilkörper und mit einem temperatursensitiven Aktuator zur Betätigung des Ventilkörpers.

Derartige Thermostatventile sind im Stand der Technik bekannt und werden in Kühlsystemen von insbesondere flüssigkeitsgekühlten Verbrennungsmotoren zur Regelung des Kühlmittelkreislaufes verwendet. Das Kühlmittel soll dabei möglichst schnell die optimale Temperatur erreichen und diese unter allen Betriebsbedingungen möglichst halten und dadurch eine Überhitzung des Motors verhindern. Bei kaltem Motor fließt das Kühlmittel dann in einer Grundstellung direkt vom Motor in einen Vorlaufanschluss und aus dem Vorlaufanschluss direkt in den Rücklaufanschluss und weiter zum Motor, ohne dass das Kühlmittel durch einen Wärmetauscher geleitet wird. Werden hohe Kühlmitteltemperaturen erreicht, so ist es erforderlich, dass das Kühlmittel einem Wärmetauscher zugeleitet wird, um es dort zu kühlen.

Derartige Thermostatventile sind beispielsweise aus der DE 10 2013 209 965 A1 oder der EP 2 019 915 B1 vorbekannt.

Aus der DE 10 2005 048 286 A1 ist ein Thermostatventil bekannt, bei dem zwei Thermostate TH1 und TH2 vorgesehen sind, die jeweils einen eigenen Ventilkörper aufweisen.

Aus der DE 23 20 447 A ist ein Thermostatventil mit zwei unterschiedlichen Ventilkörper vorgesehen, wobei ein Ventilkörper über ein Dehnstoffelement und ein weiterer Ventilkörper über ein zweites Dehnstoffelement betätigt wird.

Der vorliegenden Erfindung liegt die Aufgabe zugrunde, ein Thermostatventil bereitzustellen, das vergleichsweise einfach aufgebaut ist und dennoch eine bedarfsgerechte Kühlung gewährleistet.

Diese Aufgabe wird mit einem Thermostatventil mit den Merkmalen des Anspruchs 1 gelöst. Folglich ist vorgesehen, dass wenigstens zwei hintereinander in Reihe geschaltete temperatursensitive Aktuatoren vorgesehen sind, die den Ventilkörper gegen ein Rückstellelement betätigen. Die Betätigung ist dabei derart, dass der Ventilkörper bei unterschreiten einer im Vorlaufanschluss vorliegenden Kühlmitteltemperatur t₁ in eine Grundstellung, in der der Vorlaufanschluss mit dem Rücklaufanschluss verbunden ist, gedrängt wird. Bei dieser Stellung wird folglich vorzugsweise das gesamte Kühlmittel, ohne dass es einem Wärmetauscher zugeführt wird, über den Rücklaufanschluss wieder dem Verbrennungsmotor zugeführt.

Ferner ist vorgesehen, dass bei Überschreiten der Kühlmitteltemperatur t₁ und bei Unterschreiten einer Kühlmitteltemperatur t₂ der Ventilkörper in eine Teillaststellung gedrängt, in der der Vorlaufanschluss mit dem Rücklaufanschluss und dem Wärmetauscheranschluss verbunden ist. Dadurch wird bewirkt, dass ein Teil des vom Vorlaufanschluss kommenden Kühlmittels dem Rücklaufanschluss zugeführt wird, und damit an den Verbrennungsmotor geleitet wird, und dass ein anderer Teil des Kühlmittels dem Wärmetauscheranschluss und damit dem Wärmetauscher zur Kühlung zugeleitet wird. Dies hat zur Folge, dass lediglich ein Teilstrom, insbesondere ein Teilstrom von 50% des Kühlmittels, über den Wärmetauscher gekühlt wird und der andere Teilstrom, der vorzugsweisen ebenfalls 50% des Kühlmittels beträgt, dem Wärmetauscher zugeleitet wird.

Weiterhin ist vorgesehen, dass bei Überschreiten der Kühlmitteltemperatur t₂ der Ventilkörper in eine Volllaststellung gedrängt wird, in der der Vorlaufanschluss mit dem Wärmetauscheranschluss verbunden ist. In dieser Volllaststellung wird folglich der gesamte Kühlmittelstrom vom Vorlaufanschluss kommend über den Wärmetauscheranschluss dem Wärmetauscher zugeleitet. Der gesamte Kühlmittelstrom wird folglich im Wärmetauscher gekühlt, bevor er dem Motor wieder zugeführt wird.

Durch die hintereinander in Reihe geschalteten Aktuatoren kann ein zweistufiges Ventilverhalten auf einfache Art und Weise erreicht werden. Die beiden temperatursensitiven Aktuatoren sind dabei derart zu wählen, dass bei Überschreiten der Kühlmitteltemperatur t₁ der eine temperatursensitive Aktuator den Ventilkörper betätigt und dass bei Überschreiten der Kühlmitteltemperatur t₂ der weitere temperatursensitive Aktuator den Ventilkörper betätigt. Trotz eines vergleichsweise einfachen Aufbaus kann dennoch ein sicheres Betätigen des Thermostatventils gewährleistet werden und Kühlmittel kann entsprechend dem Rücklaufanschluss und/oder dem Wärmetauscheranschluss zugeleitet werden.

Das Rückstellelement ist dabei vorzugsweise so angeordnet, dass es den Ventilkörper entgegen den beiden temperatursensitiven Aktuatoren in die Grundstellung drängt. Dies hat den Vorteil, dass bei Abkühlen der Kühlmitteltemperatur unter den Wert t₂ in die Teillaststellung drängt, entgegen dem einen temperatursensitiven Aktuator, und dass bei weiterem Temperaturrückgang der Temperatur unter den Wert t₁ das Rückstellelement den Ventilkörper in die Grundstellung gegen die Betätigungsrichtung des anderen temperatursensitiven Aktuators drängt.

Vorteilhafterweise ist einer der Aktuatoren als Dehnstoffelement, insbesondere als Wachsdehnstoffelement, und einer der Aktoren als SMA-Element, also als Shape memory alloy Element bzw. als Formgedächtnislegierung, ausgebildet. Die Kombination von einem Dehnstoffelement und einem damit in Reihe geschalteten SMA-Element hat sich als besonders vorteilhaft herausgestellt, insbesondere dann, wenn bei Erreichen der Temperatur t₁ das Dehnstoffelement den Ventilkörper unmittelbar oder mittelbar von der Grundstellung in die Teillaststellung schaltet, und wenn bei Erreichen der Temperatur t₂ das SMA-Element den Ventilkörper unmittelbar oder mittelbar in die Volllaststellung drängt. Der SMA-Aktuator kann insbesondere so ausgebildet werden, dass er einen vergleichsweise engen Schaltbereich aufweist und durch entsprechend geringe Masse und gute Wärmeleitung eine vergleichsweise kurze Schaltzeit aufweist. Dies ist insbesondere wichtig, um vergleichsweise schnell in die Volllaststellung zu schalten, um eine Überhitzung des Kühlmittels und damit des Verbrennungsmotors zu verhindern.

Es hat sich als vorteilhaft herausgestellt, wenn der Ventilkörper als axial in einem Ventilraum verlagerbarer Ventilkolben ausgebildet ist, der an seiner Stirnseite einen Kolbeneinlass aufweist, welcher über den der Ventilraum mit dem Vorlaufanschluss verbunden ist. Der Ventilkolben sieht zudem vorzugsweise einen an seiner Mantelfläche vorgesehenen, mit dem Kolbeneinlass verbundenen Kolbenauslass auf, wobei an der Mantelfläche des Ventilraums mit dem Kolbenauslass je nach axialer Stellung des Ventilkolbens der Rücklaufanschluss und/oder der Wärmetauscheranschluss korrespondierend vorgesehen ist. In der Grundstellung korrespondiert folglich der Kolbenauslass mit dem Rücklaufanschluss, in der Teillaststellung korrespondiert der Kolbenauslass mit dem Rücklaufanschluss und dem Wärmetauscheranschluss und in der Volllaststellung korrespondiert der Rücklaufanschluss mit dem Wärmetauscheranschluss.

Die beiden Aktuatoren sind dabei vorteilhafterweise an der dem Kolbeneinlass abgewandten Stirnseite des Ventilkolbens vorgesehen, wobei das Rückstellelement vorzugsweise auf der dem Kolbeneinlass zugewandten Stirnseite des Ventilkolbens vorgesehen ist und den Ventilkolben entsprechend beaufschlagt. Das Rückstellelement kann dabei vorzugsweise als Schraubenfederelement ausgebildet sein, welches sich einerends am Gehäuse abstützt und andererends gegen den Ventilkolben wirkt.

Ferner ist vorteilhaft, wenn der zweite Aktuator, der den Ventilkolben bei Überschreiten der Kühlmitteltemperatur t₂ in die Volllaststellung drängt, als Schraubenfederelement aus insbesondere einem SMA-Material ausgebildet ist. Dabei ist vorteilhaft, wenn erste Aktuator einen Aufnahmeabschnitt zur wenigstens abschnittsweisen Aufnahme des zweiten Aktuators derart aufweist, dass sich der zweite Aktuator einerseits am ersten Aktuator und andererseits am Ventilkolben abstützt. Dadurch kann eine sichere Anordnung des zweiten Aktuators am ersten Aktuator bereitgestellt werden, wobei die beiden Aktuatoren dennoch hintereinander in Reihe geschaltet angeordnet sind.

Gemäß einer anderen Ausführungsform der Erfindung ist vorteilhaft, wenn der Ventilkörper als in einem Ventilraum um eine Drehachse verdrehbarer Drehkörper ausgebildet ist, der an seiner Mantelfläche einen Körpereinlass, welcher mit dem Vorlaufanschluss verbunden ist, vorsieht. Ferner ist vorzugsweise an der Mantelfläche ein Körperauslass, der mit dem Körpereinlass verbunden ist, vorgesehen, wobei an der Mantelfläche des Ventilraums mit dem Körperauslass je nach Drehstellung der Rücklaufanschluss und/oder der Wärmetauscheranschluss korrespondierend vorgesehen sind. In der Grundstellung korrespondiert folglich der Körperauslass vollständig mit dem Rücklaufanschluss. In der Teillaststellung korrespondiert der Körperauslass mit dem Rücklaufanschluss und dem Wärmetauscheranschluss. In der Volllaststellung korrespondiert der Körperauslass lediglich mit dem Wärmetauscheranschluss. Als Rückstellelement ist hier vorzugsweise eine Spiralfeder vorgesehen, die den Drehkörper entgegen der Betätigungsrichtung der beiden Aktuatoren in die Grundstellung drängt.

Das Ausbilden des Ventilkörpers als Drehkörper hat den Vorteil, dass in axialer Richtung kein Bauraum zur Verfügung gestellt werden muss, und dass eine ausreichende Abdichtung des Drehkörpers im Ventilraum auf einfache Art und Weise erreicht werden kann.

Vorteilhafterweise greifen die beiden Aktuatoren zur Verdrehung des Grundkörpers quer zur Drehachse des Grundkörpers und beabstandet zur Drehachse des Grundkörpers am Drehkörper an. Der Drehkörper kann dabei beispielsweise aus dem Gehäuse abschnittsweise herausragen, so dass ein Angreifen der Aktuatoren am Drehkörper außerhalb des Gehäuses erfolgen kann. Selbstverständlich können die Aktuatoren dann mit einem Gehäusedeckel abgedeckt sein. Vorteilhafterweise ist vorgesehen, dass wenigstens einer der beiden Aktuatoren zur Verdrehung des Grundkörpers am Grundkörper tangential angreifen, und zwar an einem Punkt, der von der Drehachse des Drehkörpers beabstandet ist. Der Drehkörper kann dabei beispielsweise abschnittsweise aus dem Gehäuse herausragen und einen Angriffsabschnitt vorsehen. An diesem kann dann beispielsweise einer beiden hintereinander geschalteten Aktuatoren am Drehkörper insbesondere tangential angreifen.

Vorteilhaft ist, wenn der zweite Aktuator als Seilelement aus einem SMA-Material ausgebildet ist und abschnittsweise am Drehkörper anliegend oder diesen umwickelnd am Drehkörper angreift. Bei Überschreiten der Kühlmitteltemperatur t₂ zieht sich dabei beispielsweise das SMA-Material des Seilelements zusammen, wodurch das Seilelement als solches verkürzt wird und dadurch den Drehkörper in die entsprechende Stellung schaltet, insbesondere in die Volllaststellung. Konstruktiv kann dabei zwischen dem Seilelement und dem ersten Aktuator ein am oder im Gehäuse verschiebbar geführt angeordnetes Schiebeelement vorgesehen sein. Bei Überschreiten der Kühlmitteltemperatur t₁ betätig dann der erste Aktuator dieses Schiebeelement, wodurch der Drehkörper über das Seilelement in die Teillaststellung verdreht wird.

Ferner ist vorteilhaft, wenn dann bei Überschreiten der Kühlmitteltemperatur t₂, wie bereits erwähnt, sich das Seilelement verkürzt, wodurch der Drehkörper dann in die Volllaststellung verdreht wird.

Um gewisse Toleranzen und auftretende Kräfte ausgleichen zu können, ist vorteilhaft, wenn zwischen dem ersten Aktuator und dem Schieberelement ein Ausgleichsfederelement vorgesehen ist.

Um zu gewährleisten, dass insbesondere der erste Aktuator in Abhängigkeit von der im Vorlauf herrschenden Kühlmitteltemperatur schaltet, ist vorteilhaft, wenn das Schiebeelement und insbesondere der erste und/oder zweite Aktuator an einer dem Vorlaufanschluss gegenüberliegenden Seite am oder im Gehäuse angeordnet ist.

Weitere Einzelheiten und vorteilhafte Ausgestaltungen der Erfindung sind der nachfolgenden Beschreibung zu entnehmen, anhand derer zwei Ausführungsbeispiele der Erfindung näher beschrieben und erläutert sind.

Es zeigen:
- Figur 1: ein erstes erfindungsgemäßes Thermostatventil;
- Figur 2: das Thermostatventil gemäß Figur 1 mit abgenommenem Gehäusedeckel;
- Figur 3: einen Längsschnitt durch das Thermostatventil gemäß Figur 1 in Grundstellung;
- Figur 4: die Ansicht gemäß Figur 3 in Teillaststellung;
- Figur 5: die Ansicht gemäß Figur 3 in Volllaststellung;
- Figur 6: die Seitenansicht auf das Ventil gemäß Figur 2 in Grundstellung ohne Gehäusedeckel;
- Figur 7: die Ansicht gemäß Figur 6 in Teillaststellung;
- Figur 8: die Ansicht gemäß Figur 6 in Volllaststellung;
- Figur 9: einen Schnitt durch das Ventil gemäß Figur 1;
- Figur 10: einen Längsschnitt durch ein weiteres erfindungsgemäßes Thermostatventil in Grundstellung;
- Figur 11: das Thermostatventil gemäß Figur 10 in Teillaststellung; und
- Figur 12: das Thermostatventil gemäß Figur 10 in Volllaststellung.

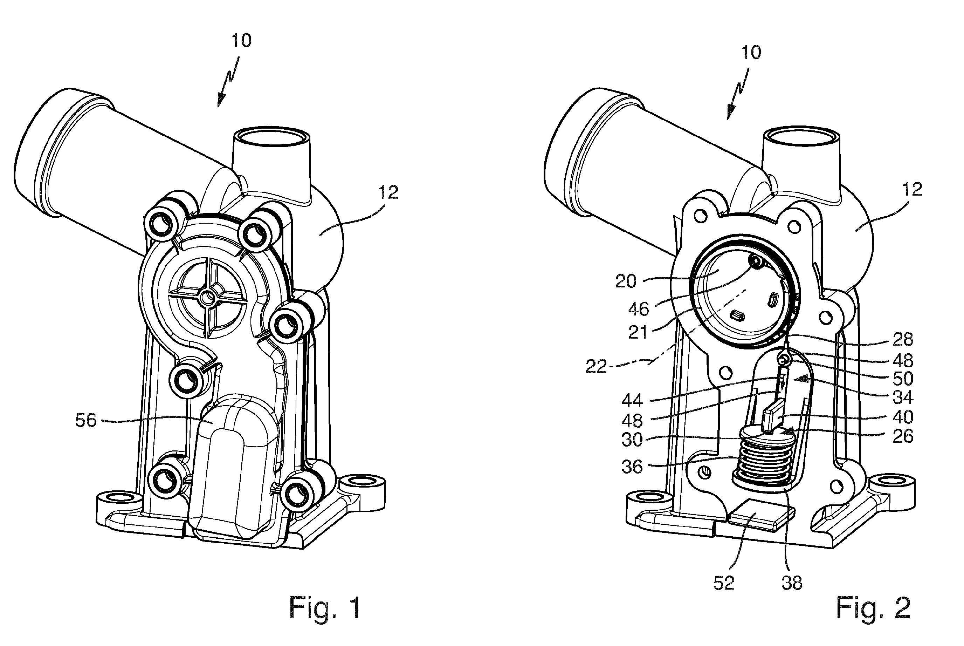

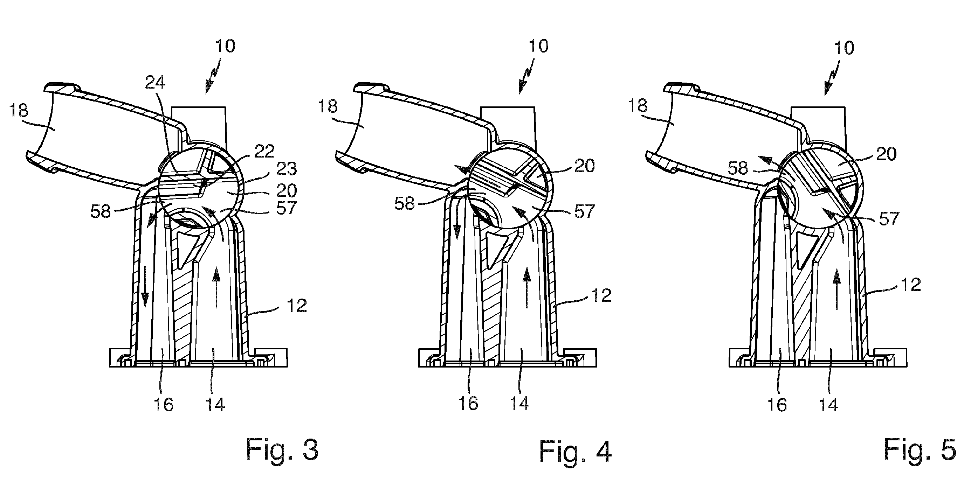

Das in den Figuren 1 bis 9 gezeigte Thermostatventil 10 umfasst ein Gehäuse 12, an dem drei Anschlüsse vorgesehen sind. Wie insbesondere aus den Schnitten gemäß Figuren 3 bis 5 deutlich wird, weist das Gehäuse 12 einen Vorlaufanschluss 14, einen Rücklaufanschluss 16 und einen Wärmetauscheranschluss 18 auf. Im Betrieb des Ventils 10 ist der Vorlaufanschluss 14 mit von einem Verbrennungsmotor kommenden Kühlmittel verbunden. Der Rücklaufanschluss 16 führt ohne Zwischenschaltung eines Wärmetauschers zurück zum Verbrennungsmotor. Der Wärmetauscheranschluss 18 führt über einen Wärmetauscher, in dem das Kühlmittel gekühlt wird, zurück zum Verbrennungsmotor.

Ferner ist im Gehäuse 12 ein verstellbarer Ventilkörper 20 vorgesehen. Der Ventilkörper 20 ist dabei als um eine Drehachse 22 in einem Ventilraum 23 verdrehbarer Drehkörper ausgebildet.

In der in Figur 3 gezeigten Drehstellung befindet sich der Ventilkörper 20 in einer Grundstellung, in der der Vorlaufanschluss 14 mit dem Rücklaufanschluss 16 verbunden ist. Durch einen am Ventilkörper 20 vorgesehenen Steg 24 wird verhindert, dass Kühlmittel, welches vom Vorlaufanschluss 14 kommt, dem Wärmetauscheranschluss 18 zugeführt wird. Durch Verdrehen des Ventilkörpers 20 im Uhrzeigersinn in die in Figur 4 gezeigte Stellung, nimmt der Ventilkörper 20 eine Teillaststellung ein. Die Teillaststellung ist derart, dass der Vorlaufanschluss 14 mit dem Rücklaufanschluss 16 als auch mit dem Wärmetauscheranschluss 18 verbunden ist. Dadurch wird bewirkt, dass über den Vorlaufanschluss 14 einströmendes Kühlmittel sowohl über den Anschluss 18 dem Wärmetauscher zugeführt wird, als auch wieder zurück in den Verbrennungsmotor über den Anschluss 16 geleitet wird.

Wird der Ventilkörper 20 ausgehend von Figur 4 weiter in die in Figur 5 gezeigte Stellung verdreht, nimmt dieser eine Volllaststellung ein, In dieser Volllaststellung ist der Vorlaufanschluss 14 ausschließlich mit dem Wärmetauscheranschluss 18 verbunden. Über den Vorlaufanschluss 14 einströmendes Kühlmittel wird dadurch vollständig über den Anschluss 18 dem Wärmetauscher zur Kühlung zugeführt.

Wie aus den Figuren 3 bis 5 bzw. 6 bis 8 deutlich wird, wird der Ventilkörper 20 von der Grundstellung in die Teillaststellung um einen Drehwinkel von ca. 20° verdreht und von der Teillaststellung in die Volllaststellung ebenfalls um einen Winkel von ca. 20°.

Der Ventilkörper 20 weist einen an seiner Mantelfläche vorgesehenen Körpereinlass 57, der mit dem Vorlaufanschluss 14 verbundenen ist, und einem an der Mantelfläche vorgesehenen, vom Körpereinlass 57 beabstandeten und mit diesem verbundenen Körperauslass 58, wobei an der Mantelfläche des Ventilraums 23 mit dem Körperauslass 57 je nach Drehstellung der Rücklaufanschluss 16 und/oder der Wärmetauscheranschluss 18 korrespondierend vorgesehen sind. Zur Verstellung des Ventilkörpers 20 in die jeweilige Drehstellung sind zwei Aktuatoren 26 und 28 vorgesehen. Bei dem ersten Aktuator 26 handelt es sich um ein Dehnstoffelement, bei dem zweiten Aktuator um ein aus einem SMA-Material hergestellten Seilelement.

Bekannte Dehnstoffelemente umfassen eine Buchse 32, in der ein Dehnstoff untergebracht ist, beispielsweise Öl, Wachs oder Hartparaffin. Bei Temperaturänderung findet ein materialabhängiger Phasenübergang statt; dadurch erfährt der Dehnstoff eine signifikante Volumenänderung. Aufgrund der Volumenänderung wird ein Stellglied 30 des Aktuators 26 in axialer Richtung bewegt.

Wie aus den Figuren 2 und 6 bis 8 deutlich wird, ist der Aktuator 26 an einem am Gehäuse 12 verschiebbar geführt angeordneten Schiebeelement 34 vorgesehen. Der Aktuator 26 ist dabei derart am Schiebeelement 34 angeordnet, dass sich die Buchse 32 über eine Ausgleichsfeder 36 an einem schieberelementseiten Absatz 38 abstützt. Das Stellglied 30 des Aktuators 26 stützt sich dabei mit seinem freien Ende an einem gehäuseseitigen, vom Gehäuse abragenden Anschlag 40 ab. Der Anschlag 40 steht dabei nasenartig vom Gehäuse 12 ab und durchgreift einen Führungsschlitz 42 des Schiebeelements 34. Aufgrund der Längserstreckung des Anschlags 40 in Richtung des Führungsschlitzes 42 wird eine ausreichende Führung des Schiebeelements 34 in Verschieberichtung 44 gewährleistet.

Der Ventilkörper ist insgesamt walzenartig ausgebildet und weist eine aus dem Gehäuse 10 herausragende Stirnseite 21 auf. Diese Stirnseite sieht einen umlaufenden Ringbund vor, um den der als Stilelement ausgebildete Aktuators 28 gewickelt ist. Wie aus Figur 1 deutlich wird, ist die Stirnseite 21 des Ventilkörpers 20 sowie das Schiebeelement 34 samt Aktuator 26 von einem Gehäusedeckel im montierten Zustand vollständig abgedeckt.

An dem dem Aktuator 26 abgewandten, oberen Ende des Schiebeelements 34 greift der Aktuator 28 am Schiebeelement 34 an. Der Aktuator 28 ist dabei aus einem SMA-Material derart, dass bei Überschreiten einer Kühlmitteltemperatur t₂ sich der Aktuator 28 zusammenzieht, wodurch sich seine Länge verkürzt.

Das dem Schiebeelement 34 abgewandte freie Ende 46 greift dabei zur Verdrehung des Ventilkörpers 20 an einer zur Drehachse 22 beabstandeten Stelle am Ventilkörper 20 an. Das dem Schiebeelement 34 zugewandte freie Ende 48 des Seilelements bzw. des Aktuators 28 ist ösenförmig ausgebildet und umschließt einen schiebeelementseitig vorgesehenen Zapfen 50, der in Verlängerung des Führungsschlitzes 42 am Schiebeelement 34 vorgesehen ist. Das Schiebeelement 34 bzw. der Aktuator 26 befindet sich dabei an einer dem Vorlaufanschluss gegenüberliegenden Seite am Gehäuse. Dadurch wird gewährleistet, dass der Aktuator 26 und auch der Aktuator 28, die Temperatur des Kühlmittels im Vorlauf annehmen.

Im Betrieb funktioniert das Thermostatventil 10 wie folgt:
Für den Fall, dass das Thermostat im Vorlaufanschluss eine Temperatur unterhalb der Temperatur t₁ aufweist, nimmt der Ventilkörper 20 die in Figur 2, 3 und 6 gezeigte Grundstellung ein. In dieser Grundstellung ist das Stellglied 30 des ersten Aktuators 26 in eingefahrener Position. Zudem nimmt der Aktuator 28, also das Seilelement, die unverkürzte Position ein. Sämtliches Kühlmittel strömt über den Vorlaufanschluss 14 in den Rücklaufanschluss 16.

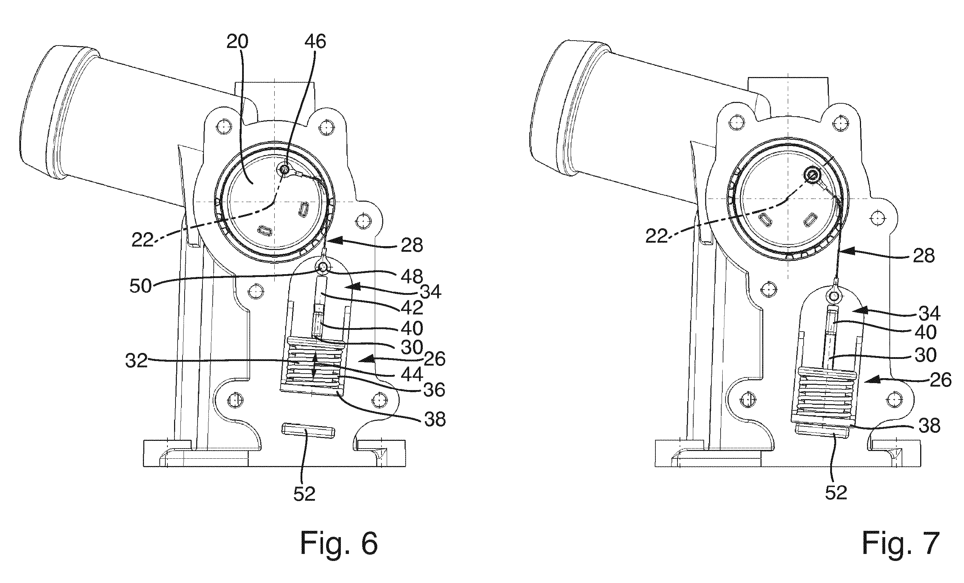

Steigt nun die Temperatur des Kühlmittels im Vorlaufanschluss 14 über eine Kühlmitteltemperatur t₁, so hat dies zur Folge, dass der Aktuator 26 schaltet. Das Stellglied 30 wird aus der Buchse 32 herausgedrückt. Dadurch, dass das freie Ende des Stellglieds 30 gegen den Anschlag 40 drückt, wird der Aktuator 26 samt Schiebeelement 34 in Verschieberichtung 44 weg vom Ventilkörper 20 bewegt, wodurch der Ventilkörper 20 über den als Seilelement 28 ausgebildeten Aktuator 28 in die in Figur 4 und 7 gezeigte Teillaststellung verdreht wird. Um zu gewährleisten, dass die Teillaststellung sicher eingenommen wird, ist am Gehäuse 12 ein weiterer Anschlag 52 vorgesehen, der als Hubbegrenzung des Schiebeelements 34 dient. Um einer Beschädigung des Aktuators 26 bei ansteigenden Temperaturen zu vermeiden, ist das Federelement 36 vorgesehen, welches zwischen dem Aktuator 26 und dem Absatz 38 vorgesehen ist. Es sollte sich der Aktuator 26 dann, wenn der Absatz am Anschlag 52 anliegt, noch weiter ausdehnen, so wird das Federelement 36 zusammengedrückt, ohne dass es zu Beschädigungen am Aktuator 26, am Anschlag 40 oder am Anschlag 52 kommt.

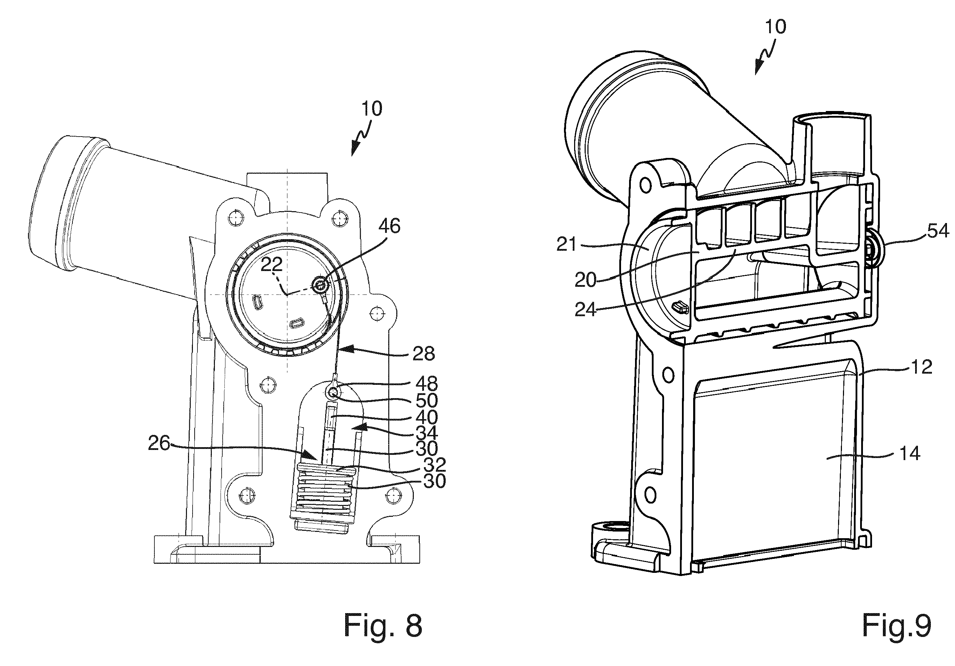

Überschreitet die Kühlmitteltemperatur eine Temperatur t₂, so wird der Aktuator 28 in Form des Seilelements aktiviert. Das Seilelement, das über das Schiebeelement 34 in Reihe mit dem Aktuator 26 geschalten ist, verkürzt aufgrund des SMA-Materials bei Überschreiten der Temperatur t₂ seine Länge, wodurch der Ventilkörper 20 aus der Teillaststellung in die Volllaststellung verdreht wird, wie sie in Figur 5 und 8 gezeigt ist. In dieser Volllaststellung strömt, wie bereits ausgeführt, sämtliches in den Vorlaufanschluss 14 einströmendes Kühlmittel hin zum Wärmetauscheranschluss 18, wodurch es zur Kühlung dem Wärmetauscher zugeleitet wird.

Aufgrund der in Serie, hintereinander geschalteten Aktuatoren 26, 28 kann der Ventilkörper 20 sicher in die verschiedenen Schaltstellungen verlagert werden.

Um sicherzustellen, dass bei fallenden Temperaturen der Ventilkörper beispielsweise aus der Volllaststellung in die Teillaststellung oder aus der Teillaststellung in die Grundstellung rückverdreht wird, ist ein Rückstellelement 54 in Form einer Spiralfeder vorgesehen, die den Ventilkörper 20 in die Grundstellung drängt. Dabei ist das eine Ende des Rückstellelements 54 am Gehäuse 12 befestigt und das andere Ende des Rückstellelements 54 beaufschlagt den Ventilkörper 20.

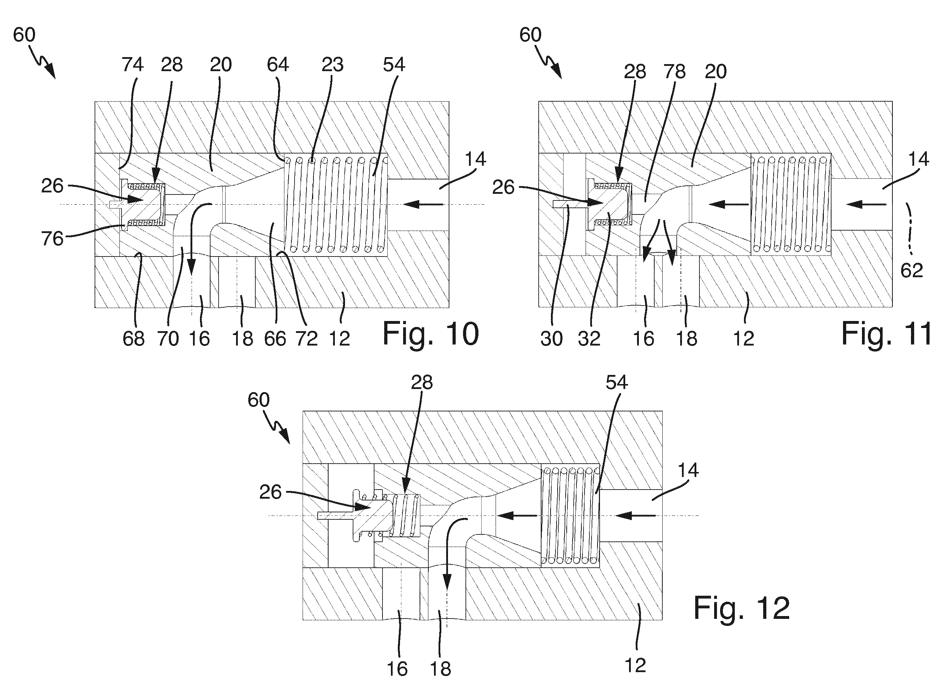

In den Figuren 10 bis 12 ist ein weiteres erfindungsgemäßes Thermostatventil 60 gezeigt, bei dem dem Ventil 10 entsprechende Bauteile mit entsprechenden Bezugszeichen gekennzeichnet sind. Anders als das Thermostatventil 10 sieht das Thermostatventil 60 einen Ventilkörper 20 vor, der in einem Ventilraum 23 entlang der Achse 62 axial verlagerbar ist.

Der Ventilkörper 20 wird dabei von dem als Schraubenfeder ausgebildeten Rückstellelement 54 in die in Figur 10 dargestellte Grundstellung gedrängt. In dieser Grundstellung ist der Vorlaufanschluss 14 mit dem Rücklaufanschluss 16 verbunden. Dazu sieht der Ventilkörper 20 an seiner dem Vorlaufanschluss 14 zugewandten Stirnseite 64 einen Kolbeneinlass 66 vor, der mit einem an der Mantelfläche 68 des Ventilkörpers 20 vorgesehenen Kolbenauslass 70 verbunden ist. Wie aus den Figuren 10 bis 12 deutlich wird, ist an der Mantelfläche 72 des Ventilraums 23 zum einen der Rücklaufanschluss 16 und zum anderen der Wärmetauscheranschluss 18 vorgesehen.

In der in der Figur 10 dargestellten Grundstellung korrespondiert der Kolbenauslass 70 ausschließlich mit dem Rücklaufanschluss 16.

Zur Betätigung bzw. zur Verstellung des Ventilkörpers 20 sind zwei Aktuatoren 26, 28 an der dem Kolbeneinlass 66 abgewandten Stirnseite 74 des Ventilkörpers 20 vorgesehen. Der Aktuator 26 ist dabei, wie beim Thermostatventil 10, als Dehnstoffelement ausgebildet. Das Stellglied 30 des Dehnstoffelements stützt sich dabei gehäuseseitig ab. Die Buchse 32 des Aktuators 26 stützt sich ventilkörperseitig ab.

Wie aus den Figuren 10 bis 12 deutlich wird, ist der Aktuator 28 als Schraubenfeder ausgebildet, die sich einerends an einen am Aktuator 26 vorgesehenen Ringbund 76 abstützt und andererends gegen den Ventilkörper 20 wirkt. Die beiden Aktuatoren 26 und 28 sind dabei hintereinander in Reihe geschalten angeordnet.

Wird das Thermostatventil 60 von Kühlmittel mit einer Temperatur unter der Temperatur t₁ durchströmt, so befindet sich der Ventilkörper in der Grundstellung gemäß Figur 10. Erhöht sich die Temperatur des Kühlmittels über die Temperatur t₁, so dehnt sich der Dehnstoff im Aktuator 26 aus, wodurch das Stellglied 30 aus der Buchse 32 geschoben wird. Insgesamt wird dadurch der Ventilkörper 20 in die in Figur 11 gezeigte Teillaststellung bewegt. In dieser Stellung wird das über den Vorlaufanschluss 14 einströmende Kühlmittel zu gleichen Teilen in den Rücklaufanschluss 16 und in den Wärmetauscheranschluss 18 geführt.

Findet eine weitere Erhöhung des Kühlmittels auf die Kühlmitteltemperatur t₂ statt, dann expandiert der als Schraubenfeder ausgebildete Aktuator 28 und betätigt den Ventilkörper 20 in die in der Figur 12 gezeigte Volllaststellung. Der Aktuator 28 stützt sich dabei einerends am Ringbund 76 und andererends am Ventilkörper 20 ab. Zur sicheren Führung des Aktuators 28 bildet die Buchse 32 des Aktuators 26 eine Aufnahme für den als Schraubenfeder ausgebildeten Aktuator 28.

In der Volllaststellung strömt schließlich das über den Vorlaufanschluss 14 einströmende Kühlmittel vollständig in den Wärmetauscheranschluss 18, wo es dann zur Kühlung einem Wärmetauscher zugeführt wird.

Wie aus den Figuren 10 bis 12 deutlich wird, weist der Ventilkörper 20 zwischen dem Kolbeneinlass 66 und dem Kolbenauslass 70 einen Durchlass 78 auf, über den Kühlmittel hin zu den Aktoren 26 und 28 strömen kann. Dadurch wird gewährleistet, dass die Aktuatoren 26 und 28 stets von Kühlmittel umspült werden und dessen Temperatur annehmen.

Sinkt die Kühlmitteltemperatur unter den Wert t₂ ab, so verringert sich die vom Aktuator 28 aufgebrachte Stellkraft, so dass der Aktuator 28 aufgrund des Rückstellelements 54 wieder die Teillaststellung gedrängt wird. Für den Fall, dass die Kühlmitteltemperatur unter die Temperatur t₁ sinkt, so verringert sich die vom Aktuator 26 aufgebrachte Stellkraft, so dass auch der Aktuator 26 aufgrund des Rückstellelements 54 wieder die Grundstellung gedrängt wird.

## Patentansprüche

1. Thermostatventil (10, 60), insbesondere für Kühlmittel von Verbrennungsmotoren, mit einem Gehäuse (12), wobei das Gehäuse (12) einen Vorlaufanschluss (14), einen Rücklaufanschluss (16) und einen Wärmetauscheranschluss (18) aufweist, mit einem im Gehäuse (12) verstellbaren Ventilkörper (20) und mit einem temperatursensitiven Aktuator (26, 28) zur Betätigung des Ventilkörpers, **dadurch gekennzeichnet, dass** wenigstens zwei hintereinander in Reihe geschaltene temperatursensitive Aktuatoren (26, 28) vorgesehen sind, die den Ventilkörper derart betätigen, dass der Ventilkörper
- bei Unterschreiten einer im Vorlaufanschluss (14) vorliegenden Kühlmitteltemperatur t₁ in eine Grundstellung, in der der Vorlaufanschluss (14) mit dem Rücklaufanschluss (16) verbunden ist,
- bei Überschreiten der Kühlmitteltemperatur t₁ und bei Unterschreiten einer Kühlmitteltemperatur t₂ in eine Teillaststellung, in der der Vorlaufanschluss (14) mit dem Rücklaufanschluss (16) und dem Wärmetauscheranschluss (18) verbunden ist, und
- bei Überschreiten der Kühlmitteltemperatur t₂ in eine Volllaststellung, in der der Vorlaufanschluss (14) mit dem Wärmetauscheranschluss (18) verbunden ist,
bewegt wird.

2. Thermostatventil (10, 60) nach Anspruch 1, **dadurch gekennzeichnet, dass** ein Rückstellelement (54) vorgesehen ist, das den Ventilkörper (20) in die Grundstellung drängt.

3. Thermostatventil (10, 60) nach Anspruch 1 oder 2, **dadurch gekennzeichnet, dass** einer der temperatursensitiven Aktuatoren (26, 28) als Dehnstoffelement und einer der temperatursensitiven Aktuatoren als SMA-Element ausgebildet ist.

4. Thermostatventil (10, 60) nach Anspruch 3, **dadurch gekennzeichnet, dass** die Aktuatoren (26, 28) derart angeordnet sind, dass der als Dehnstoffelement ausgebildete Aktuator (26) den Ventilkörper (20) in die Teillaststellung schaltet und dass der als SMA-Element ausgebildete Aktuator (28) den Ventilkörper (20) in die Volllaststellung schaltet.

5. Thermostatventil (60) nach einem der vorhergehenden Ansprüche, **dadurch gekennzeichnet, dass** der Ventilkörper (20) als axial in einem Ventilraum (23) verlagerbarer Ventilkolben (20) ausgebildet ist, mit einem an seiner Stirnseite (64) vorgesehenen Kolbeneinlass (66), der über den Ventilraum (23) mit dem Vorlaufanschluss (14) verbundenen ist, und mit einem an seiner Mantelfläche (68) vorgesehenen, mit dem Kolbeneinlass (66) verbundenen Kolbenauslass (70), wobei an der Mantelfläche (72) des Ventilraums (23) mit dem Kolbenauslass (70) je nach axialer Schalterstellung der Rücklaufanschluss (16) und/oder der Wärmetauscheranschluss (18) korrespondierend vorgesehen sind.

6. Thermostatventil (60) nach Anspruch 5, **dadurch gekennzeichnet, dass** die beiden Aktuatoren (26, 28) an der dem Kolbeneinlass (66) abgewandten Stirnseite (74) des Ventilkörpers (20) und dass das Rückstellelement (54) auf der dem Kolbeneinlass (66) zugewandten Stirnseite (64) den Ventilkörpers (20) beaufschlagt.

7. Thermostatventil (60) nach Anspruch 5 oder 6, **dadurch gekennzeichnet, dass** der zweite Aktuator (28) als Schraubenfederelement ausgebildet ist und der erste Aktuator (26) einen Aufnahmeabschnitt zur wenigstens abschnittsweisen Aufnahme des zweiten Aktuators (28) derart aufweist, dass sich der zweite Aktuator (28) einerseits am ersten Aktuator (26) und andererseits am Ventilkörper (20) abstützt.

8. Thermostatventil (10) nach einem der Ansprüche 1 bis 4, **dadurch gekennzeichnet, dass** der Ventilkörper (20) als in einem Ventilraum (23) um eine Drehachse (22) verdrehbarer Drehkörper ausgebildet ist, mit einem an seiner Mantelfläche vorgesehenen Körpereinlass (57), der mit dem Vorlaufanschluss (14) verbundenen ist, und einem an der Mantelfläche vorgesehenen, vom Körpereinlass (57) beabstandeten und mit diesem verbundenen Körperauslass (58), wobei an der Mantelfläche des Ventilraums (23) mit dem Körperauslass (58) je nach Drehstellung der Rücklaufanschluss (16) und/oder der Wärmetauscheranschluss (18) korrespondierend vorgesehen sind.

9. Thermostatventil (10) nach Anspruch 8, **dadurch gekennzeichnet, dass** wenigstens einer der beiden Aktuatoren (26, 28) zur Verdrehung des Drehkörpers (20) an einer zur Drehachse beabstandeten Stelle am Drehkörper angreift.

10. Thermostatventil (10) nach Anspruch 9 oder 10, **dadurch gekennzeichnet, dass** der zweite Aktuator (28) als Seilelement aus einem SMA-Material ausgebildet ist und abschnittsweise am Drehkörper (20) anliegend oder diesen umwickelnd am Drehkörper (20) angreift.

11. Thermostatventil (10) nach Anspruch 10, **dadurch gekennzeichnet, dass** zwischen dem zweiten Aktuator (28) und dem ersten Aktuator (26) ein am oder im Gehäuse (12) verschiebbar geführt angeordnetes Schiebeelement (34) vorgesehen ist, das vom ersten Aktuator (26) bei Überschreiten der Kühlmitteltemperatur t₁ verschoben wird, wodurch der Drehkörper (20) über den zweiten Aktuator (28) in die Teillaststellung verdreht wird.

12. Thermostatventil (10) nach Anspruch 10 und 11, **dadurch gekennzeichnet, dass** bei Überschreiten der Kühlmitteltemperatur t₂ sich der zweite Aktuator (28) verkürzt, wodurch der Drehkörper (20) in die Volllaststellung verdreht wird.

13. Thermostatventil (10) nach Anspruch 11 oder 12, **dadurch gekennzeichnet, dass** zwischen dem ersten Aktuator (26) und dem Schieberelement (34) ein Ausgleichsfederelement (36) vorgesehen ist.

14. Thermostatventil (10) nach Anspruch 11, 12 oder 13, **dadurch gekennzeichnet, dass** das Schiebeelement (34) und/oder der erste und/oder zweite Aktuator (26, 28) an einer dem Vorlaufanschluss (14) gegenüber liegenden Seite am oder im Gehäuse (12) angeordnet ist.
